# DEMANDE DE BREVET EUROPEEN

(11) **EP 0 724 358 A1**
(43) Date de publication de la demande: **31.07.1996**
(21) Numéro de dépôt: 96400150.7
(22) Date de dépôt: 22.01.1996
(51) Int. Cl.: H04N 5/235

(54) **Dispositif de réglage de l'exposition d'une caméra vidéo du type CCD**

(30) Priorité: 25.01.1995 FR 9500842
(71) Demandeur: AUTOMOBILES PEUGEOT, F-75116 Paris (FR); AUTOMOBILES CITROEN, F-92200 Neuilly sur Seine (FR)
(72) Inventeur: Brame, Jean-Luc, F-75014 Paris (FR); Alizon, Joseph, F-63670 Orcet (FR); Gallice, Jean, F-63400 Chamalieres (FR)
(74) Mandataire: Thinat, Michel

(57) **Abrégé**

La présente invention concerne un dispositif de réglage de l'exposition d'une caméra vidéo du type CCD.

Le dispositif est caractérisé en ce qu'il comprend un premier circuit d'asservissement (7a) contrôlant en permanence l'iris mécanique (4) de l'objectif (2) de la caméra (1) pour déterminer un point de fonctionnement de celle-ci en fonction de la quantité de lumière incidente reçue et un deuxième circuit d'asservissement (7b) contrôlant le temps d'intégration des charges électriques, créées par l'énergie de photons, du capteur d'images CCD (5) de la caméra (1) et, si nécessaire, effectuant une correction de toute variation rapide de quantité de lumière incidente reçue autour du point de fonctionnement.

L'invention trouve application dans le domaine de l'automobile.

## Description

La présente invention concerne un dispositif de réglage de l'exposition d'une caméra vidéo du type CCD.

Dans les systèmes de vision artificielle utilisant une caméra vidéo CCD embarquée sur un véhicule automobile, il est connu de régler l'exposition de la caméra en agissant sur trois éléments comprenant l'iris mécanique de l'objectif de la caméra, l'obturateur électronique de la caméra définissant le temps d'intégration des charges électriques, créées par l'énergie des photons de la lumière incidente, du capteur d'images CCD, et le circuit de commande automatique de gain (CAG) de la caméra.

Le document US-A-5 258 848 décrit un dispositif de contrôle d'exposition d'une caméra vidéo dans lequel on agit simultanément et en permanence sur les trois éléments ci-dessus définis de la caméra. Outre la complexité de ce dispositif connu, cette manière d'opérer simultanément et en permanence sur ces éléments présente l'inconvénient que le contrôle automatique de gain dégrade le rapport signal/bruit du signal de la caméra.

La présente invention a pour but d'éliminer les inconvénients ci-dessus du dispositif connu en proposant un dispositif de réglage de l'exposition d'une caméra vidéo du type CCD comprenant des circuits de traitement et d'asservissement contrôlant l'iris mécanique de l'objectif, l'obturateur électronique et le gain de la caméra pour régler la quantité de lumière incidente détectée par la caméra et qui est caractérisé en ce que les circuits d'asservissement comprennent un premier circuit d'asservissement contrôlant en permanence l'iris mécanique de l'objectif pour déterminer un point de fonctionnement de la caméra en fonction de la quantité de lumière incidente reçue par celle-ci et un deuxième circuit d'asservissement contrôlant le temps d'intégration des charges électriques, créées par l'énergie de photons, du capteur d'images CCD de la caméra et, si nécessaire, effectuant une correction de toute variation rapide de quantité de lumière incidente reçue autour du point de fonctionnement.

Le dispositif comprend également un troisième circuit d'asservissement de commande automatique de gain de la caméra déclenchée automatiquement pour de faibles luminosités afin d'obtenir un rapport signal/bruit optimal.

Les circuits d'asservissement précités et de traitement du signal vidéo sont analogiques.

Le dispositif comprend de plus un filtre analogique en sortie de la caméra pour éliminer les perturbations instantanées.

Avantageusement, les circuits de traitement ne traitent qu'une fenêtre de l'image vidéo de la caméra.

Les circuits d'asservissement comprennent soit un circuit de traitement vidéo analogique câblé, soit un circuit de traitement d'image numérique.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels.

La figure 1 représente une caméra vidéo classique du type CCD utilisée dans le cadre de la présente invention.

La figure 2 représente le schéma synoptique général du dispositif de l'invention.

La figure 3 représente un graphe expliquant le principe de fonctionnement du dispositif de l'invention.

La figure 4 représente une fenêtre de l'image vidéo fournie par la caméra et traitée par le dispositif de l'invention.

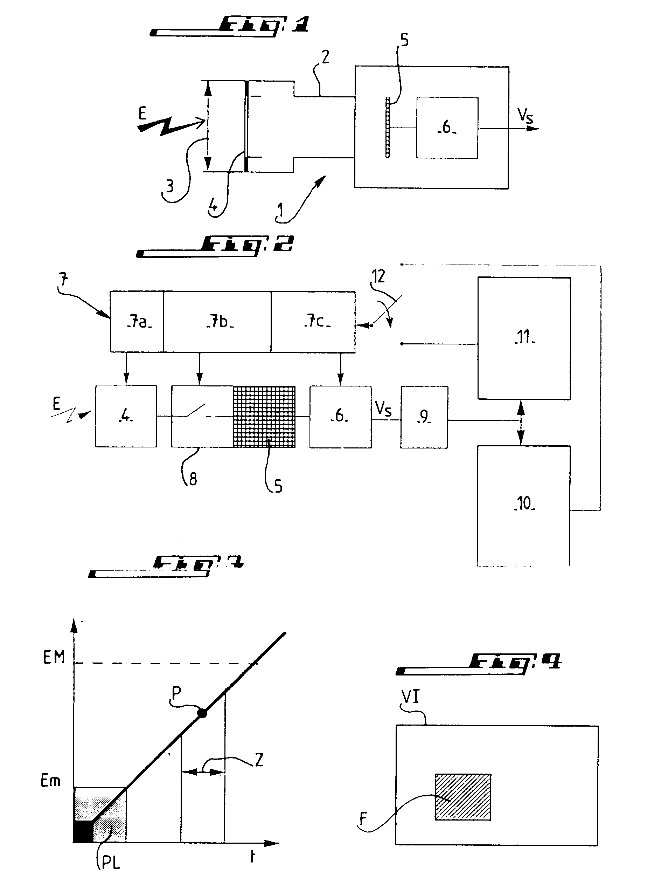

En se reportant à la figure 1, la caméra vidéo 1, du type CCD, comprend un objectif 2 comportant une lentille 3 et un iris mécanique 4 pouvant être ouvert à une valeur d'ouverture déterminée pour laisser passer une certaine quantité de lumière incidente E passant à travers la lentille 3. La lumière incidente traversant l'objectif 2 est appliquée à la surface de détection d'un capteur 5 d'images CCD, dont la sortie est reliée à un circuit amplificateur de commande automatique de gain 6 (CAG) fournissant le signal vidéo composite Vs de cette caméra.

La figure 2 représente un dispositif de réglage d'exposition de la caméra 1 de l'invention et comprenant des circuits de traitement et d'asservissement qui vont être définis ci-dessous.

Les circuits d'asservissement 7 comprennent un premier circuit d'asservissement 7a contrôlant en permanence l'iris 4 de l'objectif de la caméra 1 et agissant sur celui-ci pour déterminer un point de fonctionnement global de la caméra en fonction de la quantité de lumière incidente reçue par celle-ci.

Les circuits d'asservissement 7 comprennent de plus un deuxième circuit d'asservissement 7b contrôlant le temps d'intégration (obturateur électronique 8) des charges électriques, créées par l'énergie des photons de la lumière incidente E, du capteur d'images CCD 5 et, si nécessaire, agissant sur ce temps pour corriger les variations rapides d'éclairement autour du point de fonctionnement susmentionné.

Les circuits d'asservissement 7 comprennent enfin un troisième circuit d'asservissement 7c qui commande le circuit amplificateur CAG 6 de manière à déclencher automatiquement la commande automatique de gain pour les faibles luminosités de façon à obtenir un rapport signal/bruit optimal de jour et de nuit et utiliser toutes les possibilités de contrôle d'exposition de la caméra. Le circuit 6 n'intervient donc qu'en cas de faibles luminosités, c'est-à-dire lorsque les commandes appliquées à l'iris 4 et à l'obturateur électronique 8 ne permettent pas de maintenir le point de fonctionnement à une valeur d'exposition correcte de la caméra.

Le signal vidéo composite Vs est appliqué à un filtre analogique 9 qui élimine les perturbations instantanées et la sortie de ce filtre est reliée aux deux entrées respectivement d'un circuit de traitement numérique d'image 10 et d'un circuit de traitement vidéo analogique cablé 11 situés dans la chaîne d'asservissement. Les circuits d'asservissement 7a, 7b, 7c sont analogiques. Le fait que le traitement vidéo soit analogique simplifie la conception du système par suppression d'un convertisseur analogique-numérique et d'un processeur.

Un commutateur commandé 12 permet de choisir une boucle d'asservissement comprenant soit le circuit de traitement d'image 10, soit le circuit de traitement vidéo câblé. Les performances maximales du dispositif de réglage sont obtenues lorsqu'est couplé le circuit de traitement d'image 10.

La figure 3 représente le graphe expliquant le principe de fonctionnement du dispositif de réglage de l'invention.

La référence P représente le point de fonctionnement mobile de l'iris 4 pouvant aller au-delà de six diaphragmes d'ouverture de celui-ci et la référence Z représente la zone mobile de fonctionnement de l'obturateur électronique 8 permettant de corriger des variations rapides d'éclairement autour du point de fonctionnement P et correspondant à une correction devant être supérieure à plus ou moins deux diaphragmes. La référence PL indiquée en figure 3 correspond à la plage de fonctionnement du circuit CAG 6. Les valeurs Em à EM apparaissant sur l'ordonnée dépendent de la sensibilité de la caméra et dans le cas présent le rapport EM/Em est supérieur à dix diaphragmes. On notera que le temps de réponse des asservissements est comme suit : pour l'iris 4, le changement ou déplacement du point de fonctionnement en fonction de l'éclairement (variations lentes) est de quelques secondes et la correction de variations rapides d'éclairement autour du point de fonctionnement en agissant sur l'obturateur électronique est de quelques trames vidéo.

La commande de tous les asservissements ci-dessus est obtenue à partir d'une mesure résultant de traitements spécifiques du signal vidéo issu d'une fenêtre d'analyse programmable dynamiquement en dimension et position, indiquée par la référence F en figure 4 de l'image vidéo VI, afin d'assurer un résultat optimal, au sens du traitement de l'image, dans la fenêtre considérée F. La gestion dynamique de la fenêtre d'intérêt et le signal d'erreur résultant d'un traitement spécifique dans cette fenêtre sont alors effectués par un logiciel. Le fait de ne prendre en compte qu'une fenêtre de l'image permet une meilleure adaptation du dispositif pour des applications telles que la détection d'obstacles, ou le suivi d'une ligne blanche, lorsque la caméra vidéo est embarquée sur un véhicule automobile.

Le dispositif de réglage conforme à l'invention apporte ainsi une solution optimale dans le domaine de la vision artificielle par ordinateur utilisant une caméra vidéo et évoluant dans un milieu extérieur naturel où l'éclairement varie dans une grande dynamique et pose de nombreux problèmes. Ce dispositif rend le fonctionnement de la caméra autonome de jour et de nuit. Les deux asservissements obtenus par les circuits 7a et 7b agissent en parallèle pour satisfaire à la fois à la grande dynamique de variation de l'éclairement et aux contraintes du temps de réponse et permettent d'obtenir un résultat similaire au comportement de l'oeil humain.

## Revendications

1. Dispositif de réglage de l'exposition d'une caméra vidéo du type CCD (1) comprenant des circuits de traitement et d'asservissement (7, 10, 11) contrôlant l'iris mécanique (4) de l'objectif (2), l'obturateur électronique (8) et le gain de la caméra (1) pour régler la quantité de lumière incidente détectée par la caméra (1), caractérisé en ce que les circuits d'asservissement (7) comprennent un premier circuit d'asservissement (7a) contrôlant en permanence l'iris mécanique (4) de l'objectif (2) pour déterminer un point de fonctionnement de la caméra (1) en fonction de la quantité de lumière incidente reçue par celle-ci et un deuxième circuit d'asservissement (7b) contrôlant le temps d'intégration des charges électriques, créées par l'énergie de photons, du capteur d'images CCD (5) de la caméra (1) et, si nécessaire, effectuant une correction de toute variation rapide de quantité de lumière incidente reçue autour du point de fonctionnement.

2. Dispositif selon la revendication 1, caractérisé en ce qu'il comprend un troisième circuit d'asservissement (7c) de commande automatique de gain de la caméra (1) déclenchée automatiquement pour de faibles luminosités afin d'obtenir un rapport signal/bruit optimal.

3. Dispositif selon la revendication 1 ou 2, caractérisé en ce que les circuits d'asservissement et de traitement précités du signal vidéo de la caméra sont analogiques.

4. Dispositif selon l'une des revendications précédentes, caractérisé en ce qu'il comprend un filtre analogique (6) en sortie de la caméra (1) pour éliminer les perturbations instantanées.

5. Dispositif selon l'une des revendications précédentes, caractérisé en ce que les circuits de traitement précités ne traitent qu'une fenêtre de l'image vidéo de la caméra (1).

6. Dispositif selon l'une des revendications précédentes, caractérisé en ce que les circuits d'asservissement comprennent soit un circuit de traitement vidéo analogique câblé (11), soit un circuit de traitement d'image numérique (10).
